# EUROPEAN PATENT APPLICATION

(11) **EP 4 464 422 A1**
(43) Date of publication of application: **20.11.2024**
(21) Application number: 22920563.8
(22) Date of filing: 16.12.2022
(51) Int. Cl.: B05C 5/00, B01F 23/47, B01F 35/71, B05C 9/12, B05C 11/10, C09J 5/00, C09J 201/00

(54) **ADHESIVE BONDING DEVICE, CONTROL PROGRAM, AND ADHESIVE BODY MANUFACTURING METHOD**

(30) Priority: 14.01.2022 JP 2022004502
(71) Applicant: MITSUBISHI ELECTRIC CORPORATION, Chiyoda-ku Tokyo 100-8310 (JP)
(72) Inventor: NISHIMURA Yoshitomo, Tokyo 100-8310 (JP)
(74) Representative: Plasseraud IP
(86) International application number: PCT/JP2022/046434
(87) International publication number: WO 2023/136045

(57) **Abstract**

In an adhesive bonding apparatus, a mixer mixes a main agent and a hardener together with a stirring blade to form, in a mixing container, an adhesive (530). A presser (200a) causes a second member (620) to face a first member (610) across the adhesive (530) dispensed from the mixing container and adhering to the first member (610) and performs pressing one of the first member (610) or the second member (620) against the other. A detector detects, when the stirring blade mixes the main agent and the hardener together or when the stirring blade re-kneads the formed adhesive, torque of rotation of the stirring blade or a physical quantity representing the torque. A controller (300) controls, based on a value of the torque or the physical quantity detected by the detector, at least one of a magnitude of a force of the pressing or a time length of the pressing performed by the presser (200a).

## Description

### Technical Field

The present disclosure relates to an adhesive bonding apparatus, a control program, and an adhered body manufacturing method.

### Background Art

Patent Literature 1 describes a known apparatus for forming an adhesive containing an element of a main agent and an element of a hardener that hardens the main agent. The apparatus includes a main agent supplier for supplying the main agent, a hardener supplier for supplying the hardener independently of the main agent, and a mixing container to which the main agent and the hardener are supplied.

The main agent and the hardener are mixed in the mixing container to acquire the adhesive as the mixture of the main agent and the hardener. The acquired adhesive is applied to a first member, to which a second member is pressed to acquire an adhered body.

### Citation List

### Patent Literature

Patent Literature 1: Unexamined Japanese Patent Application Publication No. 2009-183937

### Summary of Invention

### Technical Problem

When the main agent and the hardener are supplied to the mixing container at a constant ratio, the viscosity of the acquired adhesive may vary.

When the viscosity of the adhesive varies, the area of a portion of the adhesive pressed and spread during bonding of the first member and the second member together also varies. The strength of adhesion (hereafter referred to as the adhesive strength) between the first member and the second member thus varies. A technique for reducing variations in the adhesive strength is thus awaited.

One or more aspects of the present disclosure are directed to a technique for reducing variations in adhesive strength caused by variations in an adhesive viscosity.

### Solution to Problem

An adhesive bonding apparatus according to an aspect of the present disclosure includes a main agent supplier, a hardener supplier, a mixing container, a mixer, a presser, a detector, and a controller. The main agent supplier supplies a main agent. The hardener supplier supplies a hardener for hardening the main agent. The mixing container is a mixing container to which the main agent supplier supplies the main agent and the hardener supplier supplies the hardener. The mixer includes a stirring blade located in the mixing container and a motor to rotate the stirring blade. The mixer mixes the main agent and the hardener together with the stirring blade rotatable in the mixing container to form, in the mixing container, an adhesive that is a mixture of the main agent and the hardener. The presser causes a second member to face a first member across the adhesive dispensed from the mixing container and adhering to the first member and performs pressing one of the first member or the second member against the other until the adhesive is pressed and spread. The detector detects, when the stirring blade mixes the main agent and the hardener together or when the stirring blade re-kneads the adhesive formed in the mixing container, torque of rotation of the stirring blade or a physical quantity representing the torque. The controller controls, based on a value of the torque or the physical quantity detected by the detector, at least one of a magnitude of a force of the pressing performed by the presser or a time length of the pressing performed by the presser.

### Advantageous Effects of Invention

The adhesive bonding apparatus according to the above aspect of the present disclosure controls, based on the value of the torque of rotation of the stirring blade or the physical quantity representing the torque, at least one of the magnitude of the force of the pressing or the time length of the pressing. This can reduce, when the viscosity of the adhesive varies, variations in the area of the adhesive pressed and spread by the first member and the second member. This can thus reduce variations in the adhesive strength caused by variations in the viscosity of the adhesive.

### Brief Description of Drawings

FIG. 1 is a schematic diagram of an adhesive bonding apparatus according to Embodiment 1;
FIG. 2 is a schematic diagram of a dispenser in Embodiment 1;
FIG. 3 is a schematic diagram of a presser and a controller in Embodiment 1;
FIG. 4A is a side view of an adhered body in Embodiment 1;
FIG. 4B is a plan view of a first member in Embodiment 1, illustrating a target area on the surface;
FIG. 5 is a graph illustrating the relationship between the viscosity of an adhesive in Embodiment 1 and the rotational torque of a stirring blade in forming an adhesive with the viscosity;
FIG. 6 is a graph illustrating the relationship between the torque of the stirring blade in Embodiment 1 and a specific pressing force to achieve a target filling rate;
FIG. 7 is a graph illustrating the relationship between the filling rate of the adhesive and the viscosity of the adhesive when a pressing force is fixed to an upper limit pressing force in Embodiment 1;
FIG. 8 is a flowchart of a preliminary process in Embodiment 1;
FIG. 9 is a flowchart of an adhered body manufacturing process in Embodiment 1;
FIG. 10 is a graph illustrating the relationship between the torque of a stirring blade in Embodiment 2 and a specific pressing time length to achieve a target filling rate;
FIG. 11 is a flowchart of a part of an adhered body manufacturing process in Embodiment 3;
FIG. 12 is a schematic diagram of a dispenser in Embodiment 4;
FIG. 13 is a flowchart of an adhered body manufacturing process in Embodiment 4;
FIG. 14 is a schematic diagram of a cooler installed in Embodiment 5;
FIG. 15 is a flowchart of an adhered body manufacturing process in Embodiment 5;
FIG. 16 is a graph illustrating the relationship between the viscosity of an adhesive in Embodiments 5 and 6 and the torque of the stirring blade in forming an adhesive with the viscosity;
FIG. 17 is a functional block diagram of a controller in Embodiment 6; and
FIG. 18 is a flowchart of an adhered body manufacturing process in Embodiment 6.

### Description of Embodiments

An adhesive bonding apparatus according to one or more embodiments is described below with reference to the drawings. In the drawings, like reference signs denote like or corresponding components.

### Embodiment 1

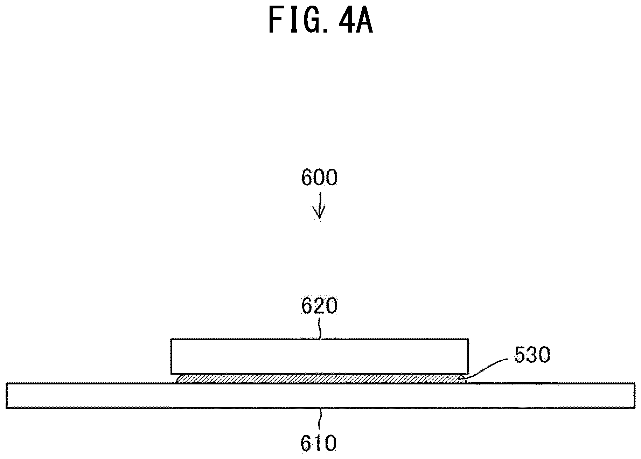

An adhered body 600 to be manufactured in the present embodiment is described with reference to FIG. 4A first. The adhered body 600 includes a plate-like first member 610 and a plate-like second member 620 bonded together with an adhesive 530.

The first member 610 and the second member 620 are formed from materials different from each other. More specifically, one of the first member 610 and the second member 620 is formed from metal or another inorganic material, and the other is formed from a resin or another organic material.

An adhesive bonding apparatus for manufacturing the adhered body 600 is described below.

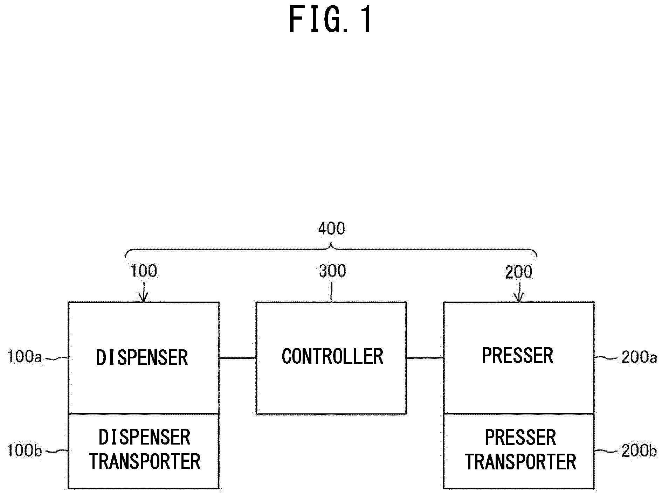

As illustrated in FIG. 1, an adhesive bonding apparatus 400 according to the present embodiment includes a dispensing device 100 that dispenses the adhesive 530 on the first member 610, a pressing device 200 that presses the second member 620 against the first member 610 with the adhesive 530 adhering, and a controller 300 that controls the dispensing device 100 and the pressing device 200.

The dispensing device 100 includes a dispenser 100a that forms and dispenses the adhesive 530 and a dispenser transporter 100b that transports the dispenser 100a. The pressing device 200 includes a presser 200a that presses the second member 620 and a presser transporter 200b that transports the presser 200a.

At a manufacturing site, the dispenser transporter 100b transports the dispenser 100a to a first position at which the first member 610 is placed. The dispenser 100a dispenses the adhesive 530 to a surface of the first member 610 at the first position. After the adhesive 530 is dispensed, the dispenser transporter 100b moves the dispenser 100a away from the first position.

The presser transporter 200b transports the presser 200a to a second position at which the second member 620 is placed. The presser 200a acquires the second member 620 at the second position.

The presser transporter 200b then transports the presser 200a with the acquired second member 620 to the first position described above. The presser 200a presses, at the first position, the second member 620 against the first member 610 with the adhesive 530 adhering. The controller 300 causes the dispensing device 100 and the pressing device 200 to repeat the operations described above.

The structure of the dispenser 100a is described in detail below.

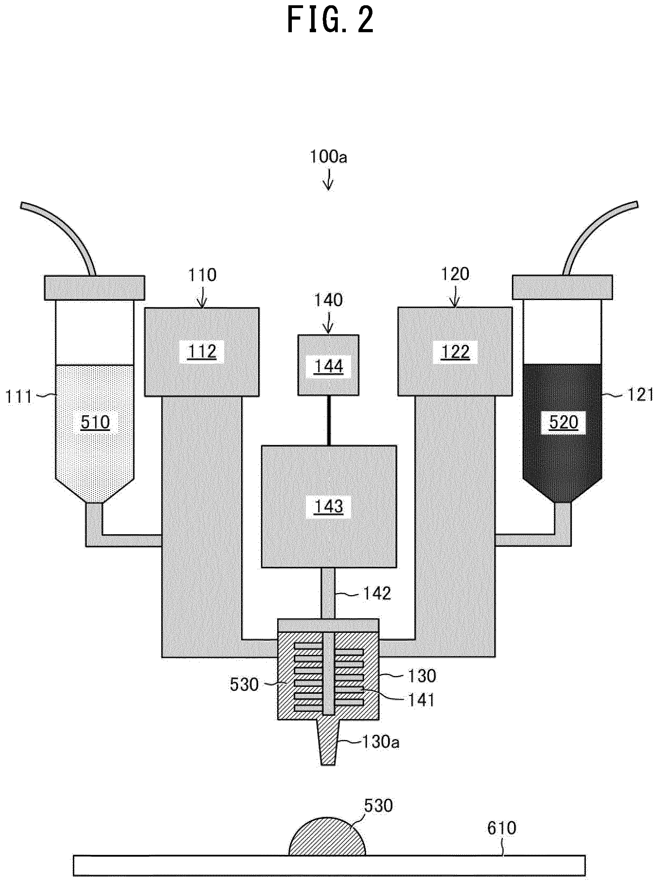

As illustrated in FIG. 2, the dispenser 100a includes a main agent supplier 110 that supplies a main agent 510 being a material for the adhesive 530. The main agent supplier 110 includes a main agent container 111 that stores the main agent 510 and a main agent feeder 112 that feeds a predetermined amount of the main agent 510 from the main agent container 111.

The dispenser 100a includes a hardener supplier 120 that supplies a hardener 520 for hardening the main agent 510. The hardener 520 is a material for the adhesive 530, similarly to the main agent 510. The hardener supplier 120 includes a hardener container 121 that stores the hardener 520 and a hardener feeder 122 that feeds a predetermined amount of the hardener 520 from the hardener container 121.

The dispenser 100a includes a mixing container 130 for mixing the main agent 510 and the hardener 520. The main agent 510 fed from the main agent container 111 by the main agent feeder 112 is supplied to the mixing container 130. The hardener 520 fed by the hardener feeder 122 from the hardener container 121 is also supplied to the mixing container 130. The main agent 510 and the hardener 520 are supplied to the mixing container 130 at a constant ratio.

The main agent 510 and the hardener 520 are mixed together at a predetermined volume ratio to acquire the adhesive 530. In other words, the adhesive 530 is a mixture of the main agent 510 and the hardener 520. The mixing container 130 includes a dispensing nozzle 130a that dispenses the adhesive 530.

The dispenser 100a also includes a mixer 140 that mixes the main agent 510 and the hardener 520 together in the mixing container 130. The mixer 140 includes a stirring blade 141 located inside the mixing container 130, a motor 143 located outside the mixing container 130, a rotational shaft 142 connecting the motor 143 and the stirring blade 141, and a power supply circuit 144 that supplies power to the motor 143.

The motor 143 operates on power supplied from the power supply circuit 144. The motor 143 rotates the stirring blade 141 at a constant rotational speed through the rotational shaft 142. The stirring blade 141 rotating in the mixing container 130 mixes the main agent 510 and the hardener 520 together. This forms the adhesive 530 being the mixture of the main agent 510 and the hardener 520 in the mixing container 130.

The structure of the presser 200a is now described.

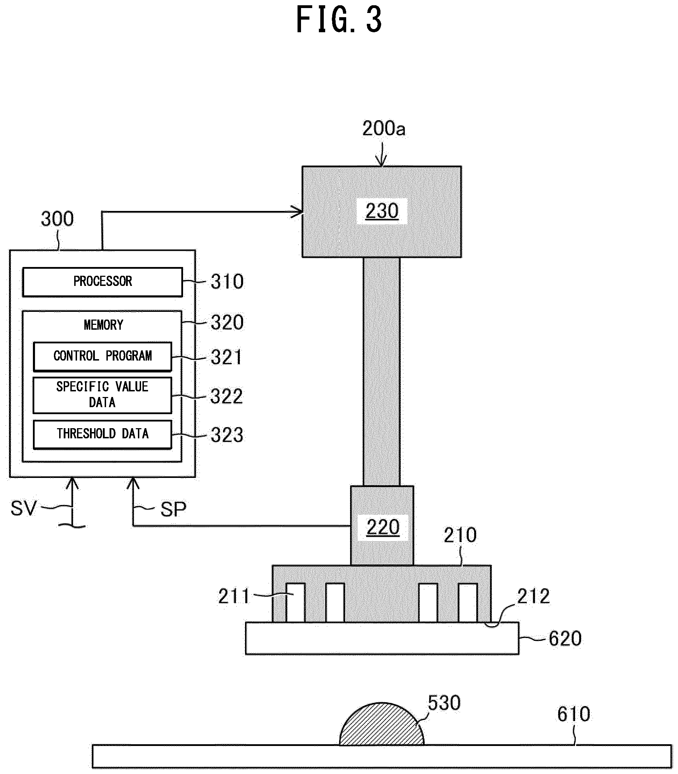

As illustrated in FIG. 3, the presser 200a includes a holder 210 that acquires and holds the second member 620. The holder 210 has a holding surface 212 having multiple suction holes 211 opening in the surface and a vacuum pump (not illustrated) that reduces the internal pressure in the suction holes 211.

The holding surface 212 is placed on the plate-like second member 620 while the internal pressure in the suction holes 211 is being reduced by the vacuum pump. The resultant pressure difference allows the holding surface 212 to suction the second member 620.

The presser 200a also includes a forward-backward mover 230 connected to the holder 210 with a load cell 220 between the presser 200a and the forward-backward mover 230. The forward-backward mover 230 moves the holder 210 forward and backward in a direction normal to the holding surface 212. More specifically, the forward-backward mover 230 operates as described below under control of the controller 300.

The forward-backward mover 230 first moves the holder 210 toward the second member 620 when the holder 210 acquires the second member 620 at the second position described above.

The forward-backward mover 230 then moves the holder 210 holding the second member 620 toward the first member 610 with the adhesive 530 adhering when the first member 610 and the second member 620 are bonded together at the first position described above. In this manner, the forward-backward mover 230 presses the second member 620 against the first member 610.

As illustrated in FIG. 4A, the second member 620 is pressed against the first member 610 until the adhesive 530 is pressed and spread by the first member 610 and the second member 620.

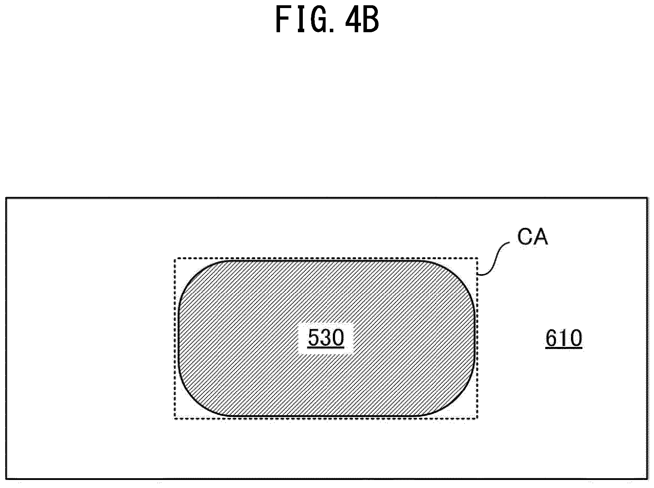

FIG. 4B is a plan view of the adhesive 530 being pressed and spread. A target area CA indicated by the broken line is an area of a surface of the first member 610 to be covered with the adhesive 530. In the present embodiment, the target area CA corresponds to a projected area of the second member 620 illustrated in FIG. 4A projected orthogonally to the first member 610.

In the present embodiment, the filling rate is defined as the ratio of an area covered with the pressed and spread adhesive 530 to the area of the target area CA. The filling rate is to be greater than or equal to a target reference value (hereafter referred to as a target filling rate), or more specifically, 85% or greater of the target filling rate, to maintain high quality of adhesion between the first member 610 and the second member 620.

However, the filling rate is dependent on the viscosity of the adhesive 530. The viscosity of the adhesive 530 may vary. The target filling rate may thus not be achieved with a known technique when the viscosity of the adhesive 530 is too high.

To achieve the target filling rate more reliably, the force of pressing (hereafter referred to as a pressing force) from the second member 620 against the first member 610 is to be adjusted based on the viscosity of the adhesive 530. The likelihood of achieving the target filling rate is also to be determined in advance using the value of the viscosity of the adhesive 530.

In these cases, the viscosity of the adhesive 530 contained in the mixing container 130 illustrated in FIG. 2 is to be identified before the first member 610 and the second member 620 are bonded together. However, measuring the viscosity of the adhesive 530 is laborious. Measuring the viscosity of the adhesive 530 manually every time an adhered body 600 is manufactured is thus impractical.

The inventor has conceived determining the viscosity of the adhesive 530 based on the torque (hereafter referred to as rotational torque) for rotating the stirring blade 141 illustrated in FIG. 2. This is described below.

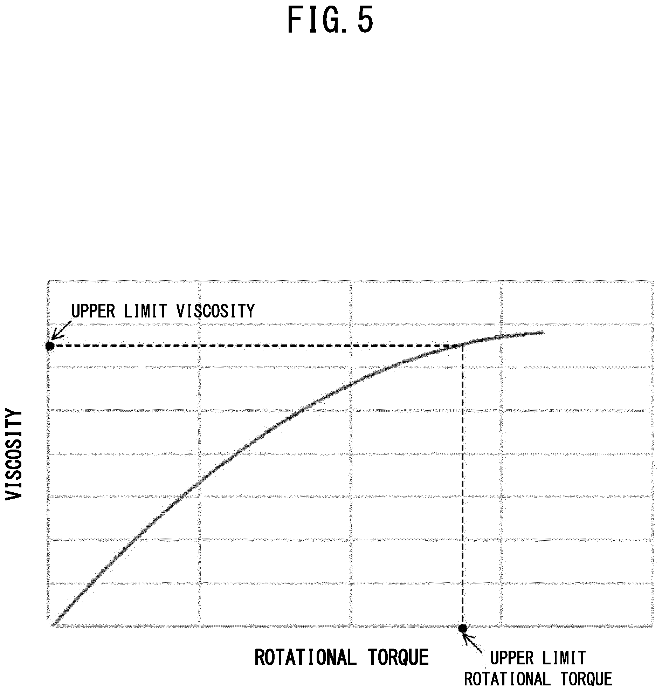

FIG. 5 is a graph illustrating the relationship between the viscosity of the adhesive 530 and the rotational torque of the stirring blade 141 in forming the adhesive 530 in the mixing container 130. The viscosity is measured based on a method described in JISZ8803.

The adhesive 530 is a non-Newtonian fluid with a viscosity that changes based on a shearing force acting on the adhesive 530. The viscosity of the adhesive 530 is thus not simply proportional to the rotational torque of the stirring blade 141.

However, the viscosity of the adhesive 530 and the rotational torque of the stirring blade 141 are notably dependent on each other. In other words, when the viscosity of the adhesive 530 is lower, the rotational torque for rotating the stirring blade 141 is smaller. When the viscosity of the adhesive 530 is higher, the rotational torque for rotating the stirring blade 141 is greater.

In this manner, the viscosity of the adhesive 530 and the rotational torque of the stirring blade 141 have a one-to-one relationship. The rotational torque of the stirring blade 141 thus represents the viscosity of the adhesive 530 to which the rotational torque is to be applied. The rotational torque of the stirring blade 141 is thus to be determined to determine the viscosity of the adhesive 530.

A method for determining the rotational torque of the stirring blade 141 is described below.

The controller 300 illustrated in FIG. 3 also controls the motor 143 illustrated in FIG. 2. More specifically, the controller 300 adjusts a voltage (hereafter referred to as a supply voltage) supplied from the power supply circuit 144 to the motor 143 to perform constant rotation control that is feedback control to cause the rotational speed of the stirring blade 141 to be closer to a predetermined value.

When the motor 143 receives a larger load, the voltage supplied to the motor 143 increases accordingly to maintain the rotational speed of the stirring blade 141. In other words, under the constant rotation control, the rotational torque of the stirring blade 141 and the voltage supplied to the motor 143 have a one-to-one relationship. The voltage supplied to the motor 143 thus represents the rotational torque of the stirring blade 141.

With the rotational torque and the supply voltage having a one-to-one relationship, the rotational torque indicated by the horizontal axis in FIG. 5 is determined by converting the supply voltage using a known relationship between the rotational torque and the supply voltage.

As described above, the rotational torque of the stirring blade 141 is represented by the voltage supplied to the motor 143. The controller 300 thus detects the voltage supplied to the motor 143 to determine the rotational torque of the stirring blade 141.

More specifically, a voltage signal SV indicating the voltage supplied to the motor 143 is input into the controller 300 as illustrated in FIG. 3. The voltage signal SV is output from the power supply circuit 144 illustrated in FIG. 2 to the controller 300. The controller 300 performs a supply voltage monitoring process to monitor the voltage supplied to the motor 143 in real time through the voltage signal SV.

The controller 300 includes a memory 320 that stores a control program 321 to define the operations of the controller 300, and a processor 310 that executes the control program 321. The processor 310 executes the control program 321 to perform the supply voltage monitoring process and the constant rotation control described above.

As described above, the voltage supplied to the motor 143 in the present embodiment is an example of a physical quantity that represents the rotational torque of the stirring blade 141. The power supply circuit 144 in the present embodiment also detects the voltage supplied to the motor 143. The power supply circuit 144 is thus an example of a detector that detects the physical quantity described above.

As described above, when the voltage supplied to the motor 143 is determined through the voltage signal SV, the rotational torque of the stirring blade 141 is determined, and thus the viscosity of the adhesive 530 is determined.

The relationship between the rotational torque of the stirring blade 141 and the pressing force (hereafter referred to as a specific pressing force) for achieving the target filling rate is now described.

Typically, the specific pressing force is dependent on the viscosity of the adhesive 530. As described above, the viscosity of the adhesive 530 is dependent on the rotational torque of the stirring blade 141. The specific pressing force is thus dependent on the rotational torque of the stirring blade 141. This is described in detail below.

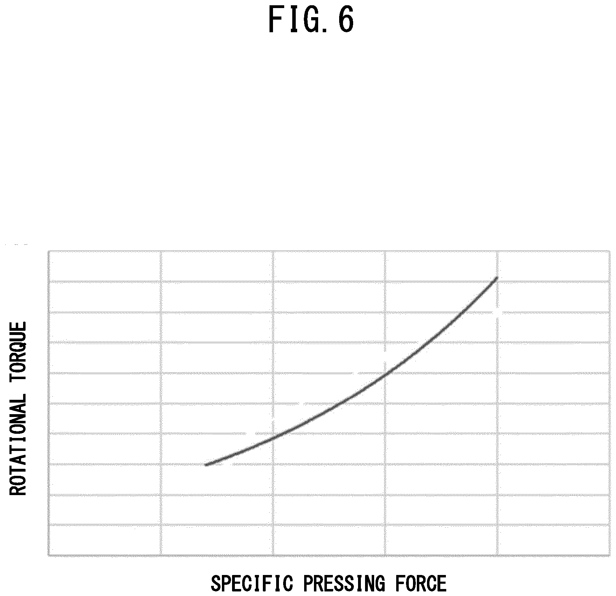

FIG. 6 is a graph illustrating the relationship between the rotational torque of the stirring blade 141 and the specific pressing force for the adhesive 530 to which the rotational torque is to be applied. In the measurement for the graph, a constant amount of the adhesive 530 is placed on the first member 610. The second member 620 is pressed against the first member 610 for a constant time length.

As illustrated in FIG. 6, the specific pressing force is dependent on the rotational torque of the stirring blade 141. The rotational torque is represented by the voltage supplied to the motor 143 as described above. The specific pressing force and the voltage supplied to the motor 143 thus have a one-to-one relationship.

The relationship between the specific pressing force and the voltage supplied to the motor 143 is thus determined in advance through measurement. In this case, when the rotational torque of the stirring blade 141 is detected based on the voltage supplied to the motor 143 in the manufacturing process of the adhered body 600, the specific pressing force corresponding to the value of the supply voltage can be identified. When the first member 610 and the second member 620 are bonded together, the target filling rate can be achieved by matching the pressing force from the second member 620 with the identified specific pressing force.

To achieve the target filling rate with such a method, the controller 300 performs pressing force control to cause the pressing force to be closer to the specific pressing force based on the voltage supplied to the motor 143.

The structure for performing the pressing force control is described in detail with reference to FIG. 3. The memory 320 in the controller 300 prestores specific value data 322 for identifying the specific pressing force. The specific value data 322 indicates the dependence of the magnitude of the specific pressing force on the rotational torque of the stirring blade 141 in preparing the adhesive 530, or in other words, the dependence of the magnitude of the specific pressing force on the supply voltage applied to the motor 143.

The load cell 220 measures, in real time, the magnitude of the pressing force with which the forward-backward mover 230 presses the second member 620 against the first member 610. The load cell 220 then outputs a pressing force signal SP indicating the measurement result to the controller 300.

The controller 300 then performs the pressing force control described below.

When the adhesive 530 is formed, the controller 300 detects the voltage supplied to the motor 143 through the voltage signal SV. As described above, the voltage supplied to the motor 143 represents the rotational torque of the stirring blade 141.

The controller 300 then identifies, using the specific value data 322, the magnitude of the specific pressing force corresponding to the rotational torque indicated by the voltage signal SV.

Subsequently, when the first member 610 and the second member 620 are bonded together, the controller 300 controls the forward-backward mover 230 to cause the pressing force from the second member 620 to be closer to the specific pressing force identified in advance. The controller 300 achieves this by performing feedback control of the forward-backward mover 230 using the pressing force signal SP acquired from the load cell 220.

The pressing force control described above adjusts the pressing force based on the rotational torque of the stirring blade 141, or in other words, the voltage supplied to the motor 143. The pressing force control is performed by the processor 310 executing the control program 321.

The setting of a threshold as an upper limit of the rotational torque of the stirring blade 141 is now described.

When the pressing force is adjusted, too high a specific pressing force may not be output to maintain the adhesion quality in the adhered body 600 and to avoid too high a load on the forward-backward mover 230. The specific pressing force in the present embodiment thus has an upper limit (hereafter referred to as an upper limit pressing force).

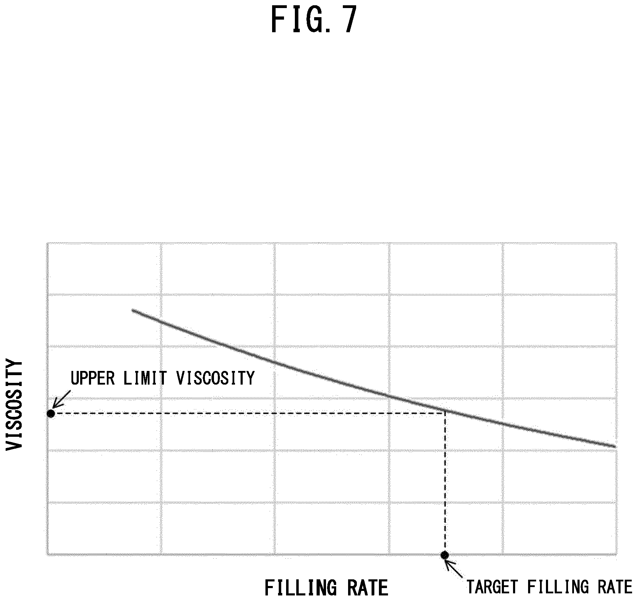

FIG. 7 is a graph illustrating the relationship between the filling rate of the adhesive 530 and the viscosity of the adhesive 530 when the pressing force is fixed at the upper limit pressing force. As illustrated in FIG. 7, the filling rate of the adhesive 530 is dependent on the viscosity of the adhesive 530.

Thus, the viscosity of the adhesive 530 (hereafter referred to as an upper limit viscosity) when the target filling rate is achieved is identified from the dependency illustrated in FIG. 7. As illustrated in FIG. 5, the viscosity of the adhesive 530 is dependent on the rotational torque of the stirring blade 141.

Thus, when the upper limit viscosity is identified from the target filling rate using the dependency illustrated in FIG. 7, the rotational torque (hereafter referred to as upper limit rotational torque) for forming the adhesive 530 with the upper limit viscosity is identified as illustrated in FIG. 5. In other words, the upper limit rotational torque represents the rotational torque when the target filling rate is achieved.

When the rotational torque of the stirring blade 141 exceeds the upper limit rotational torque, the target filling rate can be achieved by adjusting the pressing force from the second member 620 against the first member 610 to a value exceeding the upper limit pressing force. However, a pressing force exceeding the upper limit pressing force may not be output for the reasons described above.

Thus, to monitor whether the pressing force exceeding the upper limit pressing force is to be used, the controller 300 performs viscosity appropriateness determination to determine whether the rotational torque of the stirring blade 141 exceeds the upper limit rotational torque.

As described above, the rotational torque of the stirring blade 141 is represented by the voltage supplied to the motor 143. The controller 300 thus performs the viscosity appropriateness determination by determining whether the supply voltage indicated by the voltage signal SV exceeds a supply voltage (hereafter referred to as an upper limit supply voltage) representing the upper limit rotational torque.

The structure for performing the viscosity appropriateness determination is described in detail with reference to FIG. 3. The memory 320 in the controller 300 prestores threshold data 323 indicating the upper limit supply voltage described above. The controller 300 performs the viscosity appropriateness determination by comparing the supply voltage indicated by the voltage signal SV with the upper limit supply voltage indicated by the threshold data 323. When the supply voltage is lower than or equal to the upper limit supply voltage, the rotational torque is smaller than or equal to the upper limit rotational torque. When the supply voltage exceeds the upper limit supply voltage, the rotational torque exceeds the upper limit rotational torque.

When the supply voltage exceeds the upper limit supply voltage, or in other words, when the rotational torque of the stirring blade 141 exceeds the upper limit rotational torque, the pressing force exceeding the upper limit pressing force is to be used. In this case, the controller 300 performs stop control and indication control described below to avoid outputting the pressing force exceeding the upper limit pressing force.

The stop control stops supply of the main agent 510 from the main agent supplier 110 to the mixing container 130, supply of the hardener 520 from the hardener supplier 120 to the mixing container 130, and dispensing of the adhesive 530 from the mixing container 130.

The indication control indicates, to a user, that the viscosity of the adhesive 530 is abnormal. The viscosity appropriateness determination, the stop control, and the indication control are performed by the processor 310 executing the control program 321.

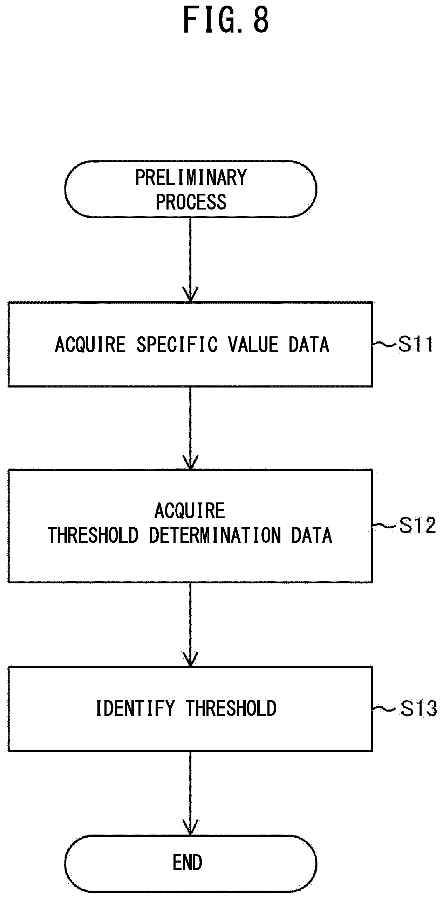

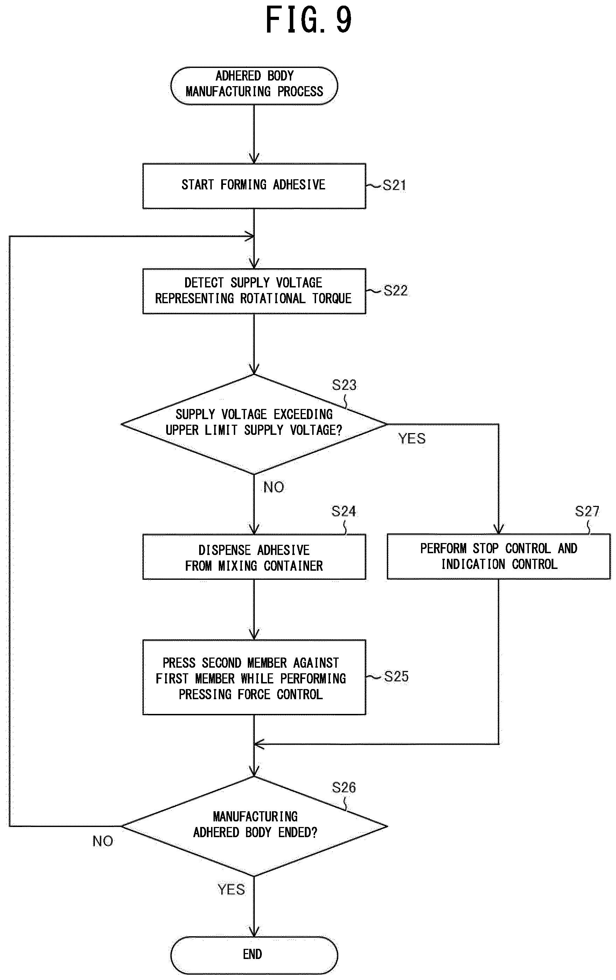

An adhered body manufacturing method for manufacturing an adhered body 600 using the adhesive bonding apparatus 400 is overviewed below. The adhered body manufacturing method according to the present embodiment includes a preliminary process illustrated in FIG. 8 and an adhered body manufacturing process illustrated in FIG. 9. The preliminary process is followed by the adhered body manufacturing process.

The preliminary process is described first. In the preliminary process, the adhesive bonding apparatus 400 operates tentatively before manufacturing the adhered body 600 as a product to determine the responsiveness of the adhesive bonding apparatus 400 to the viscosity of the adhesive 530. Operating tentatively herein refers to manufacturing the adhered body 600 that may not be provided as a product based on various parameters being varied.

In the preliminary process, as illustrated in FIG. 8, the specific value data 322 is acquired through measurement (step S 11). The specific value data 322 indicates, as described above, the dependence of the magnitude of the specific pressing force on the supply voltage applied to the motor 143.

The specific value data 322 is acquired based on the viscosity of the adhesive 530 and the pressing force from the second member 620 against the first member 610 being varied. The acquired specific value data 322 is stored into the memory 320 in the controller 300 as illustrated in FIG. 3. This step S11 is an example of a specific value data acquisition process in an aspect of the present disclosure.

In the preliminary process, threshold determination data indicating the dependence of the filling rate of the adhesive 530 on the rotational torque of the stirring blade 141 is acquired through measurement (step S12). The threshold determination data is measured, with the pressing force fixed at the upper limit pressing force, based on the viscosity of the adhesive 530 being varied.

As described above, the rotational torque of the stirring blade 141 is represented by the supply voltage applied to the motor 143. The dependence of the filling rate on the rotational torque is thus equivalent to the dependence of the filling rate on the supply voltage. More specifically, the threshold determination data indicates the relationship between the filling rate of the adhesive 530 and the supply voltage applied to the motor 143.

Then, using the threshold determination data acquired in step S12, the upper limit supply voltage that represents the upper limit rotational torque being the rotational torque when the target filling rate is achieved is identified as a threshold (step S13). With the voltage supplied to the motor 143 representing the rotational torque, identifying the upper limit rotational torque is equivalent to identifying the upper limit supply voltage representing the upper limit rotational torque. The identified upper limit supply voltage is stored, as the threshold data 323, into the memory 320 in the controller 300 as illustrated in FIG. 3.

The upper limit supply voltage identified in step S13 is an example of a first upper threshold that represents an upper limit of the rotational torque for achieving the target filling rate. Steps S12 and S13 are each an example of a threshold identification process in an aspect of the present disclosure.

The specific value data 322 and the threshold data 323 acquired in the preliminary process described above are used in the adhered body manufacturing process for manufacturing the adhered body 600 as a product. The adhered body manufacturing process is described below.

As illustrated in FIG. 9, the controller 300 starts forming the adhesive 530 (step S21). More specifically, the controller 300 controls the main agent feeder 112 and the hardener feeder 122 to start supplying the main agent 510 and the hardener 520 to the mixing container 130, and activates the motor 143.

The stirring blade 141 being rotated by the motor 143 mixes the main agent 510 and the hardener 520 together in the mixing container 130. This forms the adhesive 530 being a mixture of the main agent 510 and the hardener 520 in the mixing container 130. During this process, the controller 300 performs the constant rotation control to cause the rotational speed of the stirring blade 141 to be closer to a predetermined value.

During the formation of the adhesive 530, the controller 300 detects the voltage supplied to the motor 143 through the voltage signal SV (step S22). As described above, under the constant rotation control, the rotational torque of the stirring blade 141 and the voltage supplied to the motor 143 have a one-to-one relationship. The voltage supplied to the motor 143 thus represents the rotational torque of the stirring blade 141.

The controller 300 then determines whether the supply voltage detected through the voltage signal SV exceeds the upper limit supply voltage as the first upper threshold (step S23). Steps S21 to S23 described above are each an example of an adhesive preparation process in an aspect of the present disclosure.

When the supply voltage is lower than or equal to the upper limit supply voltage (No in step S23), or in other words, when the rotational torque of the stirring blade 141 is smaller than or equal to the upper limit rotational torque, the target filling rate is likely to be achieved without outputting the upper limit pressing force.

In this case, the mixing container 130 dispenses the adhesive 530 to the first member 610 (step S24) to bond the first member 610 and the second member 620 together. The amount of the adhesive 530 to be dispensed is predetermined. The dispensed adhesive 530 adheres to the first member 610. This step S24 is an example of an adhesive dispensing process in an aspect of the present disclosure.

In the present embodiment, the controller 300 controls opening and closing of the dispensing nozzle 130a in the mixing container 130. In other words, the mixing container 130 automatically dispenses, under control of the controller 300, a predetermined amount of the adhesive 530 to the first member 610 in step S24. In step S24, the mixing container 130 may dispense the predetermined amount of the adhesive 530 to the first member 610 through a user operation.

The presser 200a then causes the second member 620 to face the first member 610 across the adhesive 530 dispensed from the mixing container 130 and adhering to the first member 610. The presser 200a presses the second member 620 against the first member 610 until the adhesive 530 is pressed and spread (step S25).

In this step S25, the controller 300 performs the pressing force control. More specifically, the controller 300 first identifies, using the specific value data 322, the magnitude of the specific pressing force corresponding to the rotational torque indicated by the voltage signal SV.

The controller 300 then controls the forward-backward mover 230 to approximate the pressing force from the second member 620 to the specific pressing force identified in advance. This step S25 is an example of a pressing process in an aspect of the present disclosure.

In this manner, the second member 620 is pressed against the first member 610 with the specific pressing force corresponding to the viscosity of the adhesive 530. This achieves the target filling rate. Subsequently, the adhesive 530 between the first member 610 and the second member 620 fully hardens to complete the adhered body 600.

When manufacture of the adhered body 600 stops after step S25 (Yes in step S26), the adhered body manufacturing process ends.

When the manufacture of the adhered body 600 continues after step S25 (No in step S26), the processing returns to step S22 to manufacture another adhered body 600. In this manner, every time an adhered body 600 is manufactured, the viscosity of the adhesive 530 included in the adhered body 600 is determined based on the rotational torque of the stirring blade 141.

When the supply voltage exceeds the upper limit supply voltage as the first upper threshold described above in step S23 (Yes in step S23), or in other words, when the rotational torque of the stirring blade 141 exceeds the upper limit rotational torque described above, the viscosity of the adhesive 530 is too high. In this case, although the target filling rate may be achieved, a pressing force greater than the upper limit pressing force is to be output to achieve the target filling rate.

To avoid providing such an adhesive 530 for pressing, the controller 300 performs the stop control and the indication control described above (step S27).

The stop control stops supply of the main agent 510 from the main agent supplier 110 to the mixing container 130 and supply of the hardener 520 from the hardener supplier 120 to the mixing container 130, thus stopping further formation of the adhesive 530. This also stops dispensing of the adhesive 530 from the mixing container 130 to avoid providing the adhesive 530 with too high a viscosity for pressing.

The indication control indicates, to the user, that the viscosity of the adhesive 530 is abnormal. The user thus can discard the adhesive 530 with a higher viscosity remaining in the mixing container 130 and, for example, can wash the inside of the mixing container 130 and the stirring blade 141, check each part of the dispenser 100a, and replace the stirring blade 141 or another component included in the dispenser 100a.

After the adhesive 530 is removed and intended maintenance is complete while the operations of the dispensing device 100 and the pressing device 200 are temporarily stopped as described above, the processing advances to step S26.

The present embodiment produces the effects described below.

As described above, the controller 300 in the present embodiment performs the pressing force control. More specifically, the controller 300 controls the magnitude of the pressing force based on the value of the supply voltage being a physical quantity representing the rotational torque of the stirring blade 141, under a condition that the pressing force is greater when the rotational torque is greater. This reduces, when the viscosity of the adhesive 530 varies, variations in the area of the adhesive 530 pressed and spread by the first member 610 and the second member 620. This can thus reduce variations in the adhesive strength caused by variations in the viscosity of the adhesive 530.

More specifically, the pressing force control is performed every time an adhered body 600 is manufactured. In other words, when the adhered bodies 600 are manufactured in a lot, the specific pressing force is not determined for each lot, but is determined for each adhered body 600 being manufactured based on the viscosity of the adhesive 530 used for the adhered body 600. This can reduce variations in the adhesive strength within a lot.

The pressing force control controls the pressing force to be smaller when the viscosity of the adhesive 530 is lower, or in other words, when the rotational torque of the stirring blade 141 is smaller. Thus, the adhesive 530 with a lower viscosity is prevented from being spread outside the target area CA illustrated in FIG. 4B. This also improves the adhesion quality. Additionally, this eliminates removing of the adhesive 530 spread outside the target area CA, thus providing convenience.

In the present embodiment, when the viscosity of the adhesive 530 is too high, the rotational torque of the stirring blade 141 exceeds the upper limit rotational torque described above, causing the controller 300 to perform the stop control and the indication control. This avoids use of the adhesive 530 with too high a viscosity for the adhered body 600. This can thus prevent variations in the adhesive strength or a decrease in the adhesion quality caused by the adhesive 530 with too high a viscosity.

### Embodiment 2

In Embodiment 1 described above, the pressing force control to control the pressing force from the second member 620 against the first member 610 based on the voltage supplied to the motor 143 is described. Instead of the pressing force, the time length (hereafter referred to as a pressing time length) for which the second member 620 is pressed against the first member 610 may be controlled. In a specific example described below, the pressing time length is controlled.

Typically, the pressing time length (hereafter referred to as a specific pressing time length) for achieving the target filling rate is dependent on the viscosity of the adhesive 530. The viscosity of the adhesive 530 is dependent on the rotational torque of the stirring blade 141 as described above. The specific pressing time length is thus dependent on the rotational torque of the stirring blade 141. This is described in detail below.

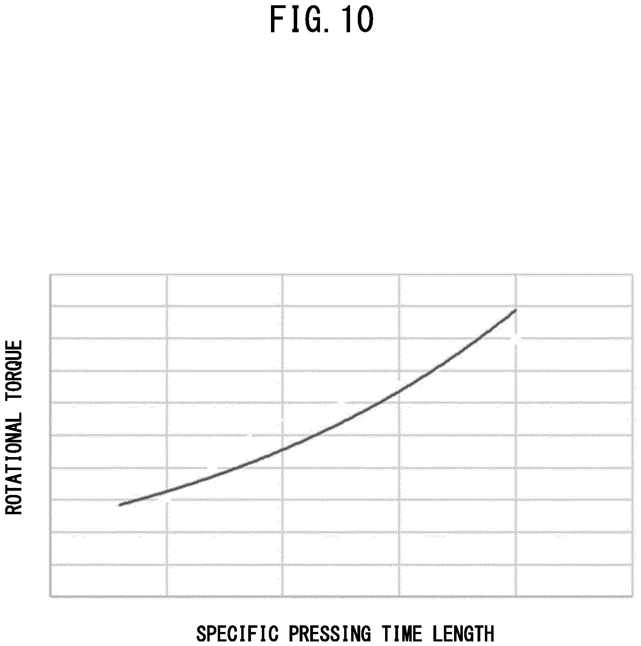

FIG. 10 is a graph illustrating the relationship between the rotational torque of the stirring blade 141 and the specific pressing time length for the adhesive 530 to which the rotational torque is to be applied. In the measurement for the graph, a constant amount of the adhesive 530 is placed on the first member 610. The pressing force from the second member 620 against the first member 610 is also fixed at a predetermined magnitude (hereafter referred to as a reference pressing force). The reference pressing force is smaller than the upper limit pressing force described above.

As illustrated in FIG. 10, the specific pressing time length is dependent on the rotational torque of the stirring blade 141. The rotational torque is represented by the voltage supplied to the motor 143 as described above. The specific pressing time length thus has a one-to-one relationship with the voltage supplied to the motor 143.

The relationship between the specific pressing time length and the voltage supplied to the motor 143 is determined in advance through measurement. When the rotational torque of the stirring blade 141 is detected based on the voltage supplied to the motor 143 in the manufacturing process of the adhered body 600, the specific pressing time length corresponding to the value of the supply voltage can be identified. Then, when the first member 610 and the second member 620 are bonded together, the target filling rate can be achieved by matching the pressing time length of the second member 620 with the specific pressing time length identified in advance.

In the present embodiment, the target filling rate is achieved with such a method. More specifically, in the present embodiment, the pressing force is fixed at the reference pressing force in step S11 in FIG. 8, and the specific value data 322 is acquired through measurement based on the viscosity of the adhesive 530 and the pressing time length of the second member 620 against the first member 610 being varied (step S11).

The specific value data 322 in the present embodiment indicates the dependence between the specific pressing time length and the supply voltage applied to the motor 143.

The controller 300 in the present embodiment performs, using the specific value data 322, pressing time length control to control the pressing time length based on the voltage supplied to the motor 143, under a condition that the pressing time length is longer when the rotational torque is greater.

More specifically, when the adhesive 530 is formed, the controller 300 detects the voltage supplied to the motor 143 through the voltage signal SV. As described above, the voltage supplied to the motor 143 represents the rotational torque of the stirring blade 141.

The controller 300 then identifies, using the specific value data 322, the specific pressing time length corresponding to the rotational torque represented by the voltage signal SV.

Subsequently, when the first member 610 and the second member 620 are bonded together, the controller 300 controls the forward-backward mover 230 to match the pressing time length of the second member 620 with the specific pressing time length identified in advance. The pressing time length control described above is performed by the processor 310 executing the control program 321.

In the present embodiment, the pressing force from the second member 620 against the first member 610 can be fixed at the reference pressing force, thus simplifying the structure of the presser 200a. Other components and effects are the same as in Embodiment 1.

### Embodiment 3

In Embodiment 1 described above, the adhered body manufacturing process continuously manufactures the adhered bodies 600. After manufacturing one adhered body 600, a period (hereafter referred to as a rotation stop period) for which the stirring blade 141 temporarily stops rotating may follow before starting the manufacture of another adhered body 600.

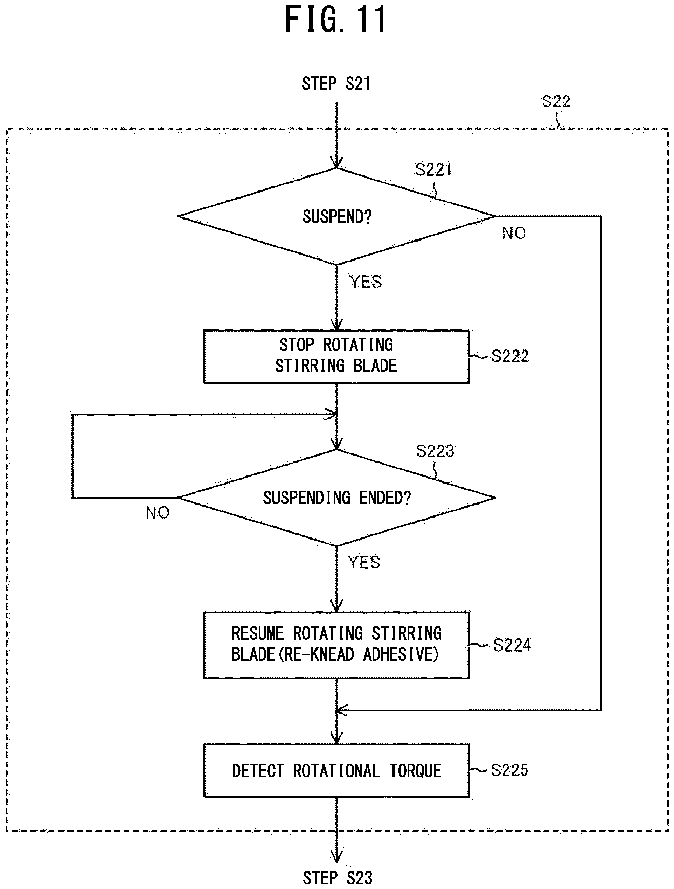

In a specific example described below, step S22 in FIG. 9 includes the rotation stop period. In the present embodiment, step S22 in FIG. 9 includes steps S221 to S225 in FIG. 11. Each of steps S221 to S225 is described in detail below.

As illustrated in FIG. 11, the determination is performed as to whether the manufacture of the adhered body 600 is suspended (step S221). When the manufacture of the adhered body 600 is suspended (Yes in step S221), the controller 300 causes the stirring blade 141 to stop rotating (step S222). The controller 300 also causes the pressing device 200 to stop operating.

After the processing in step S222 is performed, the determination is performed as to whether suspending the manufacture of the adhered body 600 is ended (step S223). When suspending the manufacture of the adhered body 600 does not end (No in step S223), the processing returns to step S223 again.

When suspending the manufacture of the adhered body 600 ends (Yes in step S223), the controller 300 causes the stirring blade 141 to resume rotating (step S224). The controller 300 also activates the pressing device 200. A period including steps S222 to S224 is the rotation stop period described above.

When the stirring blade 141 resumes rotating, the stirring blade 141 re-kneads the adhesive 530 formed in the mixing container 130 before step S221.

The user may perform the determination in step S221. In other words, the controller 300 may perform the processing in step S222 upon a user operation on the adhesive bonding apparatus 400 to stop the manufacture of the adhered body 600. Similarly, the user may perform the determination in step S223. In other words, the controller 300 may perform the processing in step S224 upon a user operation on the adhesive bonding apparatus 400 to resume the manufacture of the adhered body 600.

The controller 300 may perform the determination in step S221. In other words, the controller 300 may perform the processing in step S222 at a predetermined time or upon acquiring a signal to stop the manufacture of the adhered body 600. Similarly, the controller 300 may perform the determination in step S223. In other words, the controller 300 may perform the processing in step S224 at a predetermined time or upon acquiring a signal to resume the manufacture of the adhered body 600.

After performing the processing in step S224, the controller 300 detects the rotational torque of the stirring blade 141 for re-kneading the adhesive 530 (step S225). More specifically, the controller 300 detects the supply voltage representing the rotational torque through the voltage signal SV.

When the manufacture of the adhered body 600 is not suspended in step S221 (No in step S221), the processing advances to step S225. In this case, the rotational torque of the stirring blade 141 for mixing the main agent 510 and the hardener 520 is detected in step S225.

After step S225, the processing advances to step S23 in FIG. 9. In the present embodiment, the determination in step S23 in FIG. 9 is performed using the rotational torque detected in step S225. Other processing is the same as in Embodiment 1.

The present embodiment produces the effects described below. When the adhered body manufacturing process includes the rotation stop period, the adhesive 530 formed in the mixing container 130 continues hardening during the rotation stop period. Thus, with a known technique, the adhesive 530 dispensed from the mixing container 130 immediately after the end of the rotation stop period may not achieve the target filling rate.

In the present embodiment, the adhesive 530 is re-kneaded after the end of the rotation stop period. Additionally, the pressing force control is performed based on the rotational torque of the stirring blade 141 for re-kneading the adhesive 530, under the condition that the pressing force is greater when the rotational torque is greater. The pressing time length control may be performed based on the rotational torque of the stirring blade 141 for re-kneading the adhesive 530, under the condition that the pressing time length is longer when the rotational torque is greater. This achieves the target filling rate using the adhesive 530 re-kneaded. Other components and effects are the same as in Embodiment 1.

### Embodiment 4

When the supply voltage exceeds the upper limit supply voltage in step S23 in FIG. 9 (Yes in step S23), or in other words, when the rotational torque of the stirring blade 141 exceeds the upper limit rotational torque described above, the viscosity of the adhesive 530 is too high. In this case, although the target filling rate may be achieved, a pressing force greater than the upper limit pressing force is to be output to achieve the target filling rate.

In Embodiment 1, when the supply voltage exceeds the upper limit supply voltage (Yes in step S23), the controller 300 performs the stop control and the indication control described above (step S27) to avoid providing the adhesive 530 with too high a viscosity for the pressing process (step S25).

However, the stop control and the indication control (step S27) may not be performed when the viscosity of the adhesive 530 can be reduced although the supply voltage exceeds the upper limit supply voltage. In a specific example described below, the controller 300 performs, instead of the stop control and the indication control (step S27), viscosity reduction control to reduce the viscosity of the adhesive 530.

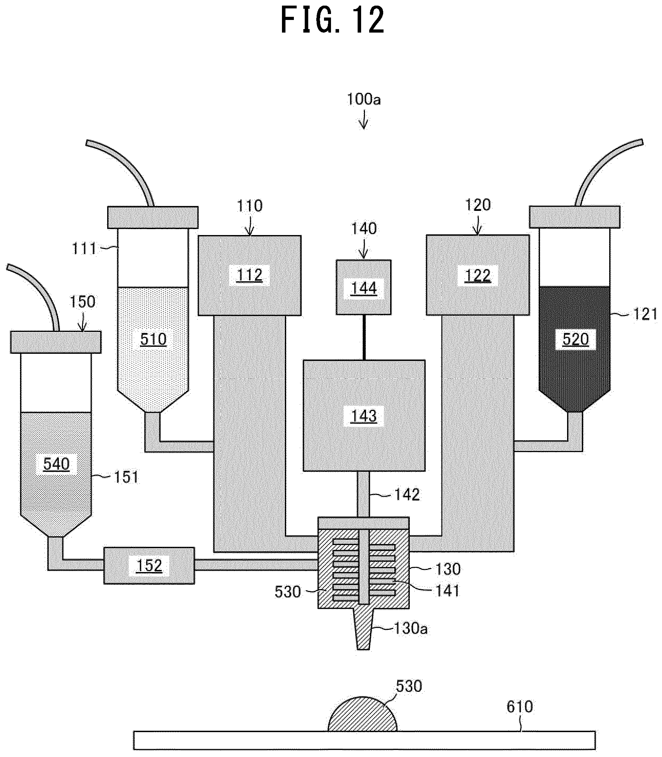

As illustrated in FIG. 12, a dispenser 100a in the present embodiment further includes a viscosity reducer supplier 150 that supplies a viscosity reducer 540. Other components are the same as in Embodiment 1.

The viscosity reducer 540 reduces the viscosity of the mixture of the main agent 510 and the hardener 520. The viscosity reducer 540 is compatible with the mixture of the main agent 510 and the hardener 520.

The viscosity reducer supplier 150 includes a viscosity reducer container 151 that stores the viscosity reducer 540 and a viscosity reducer feeder 152 that feeds the viscosity reducer 540 from the viscosity reducer container 151 to the mixing container 130. Upon receiving a first operation command from the controller 300, the viscosity reducer supplier 150 adds the viscosity reducer 540 to the mixture in the mixing container 130.

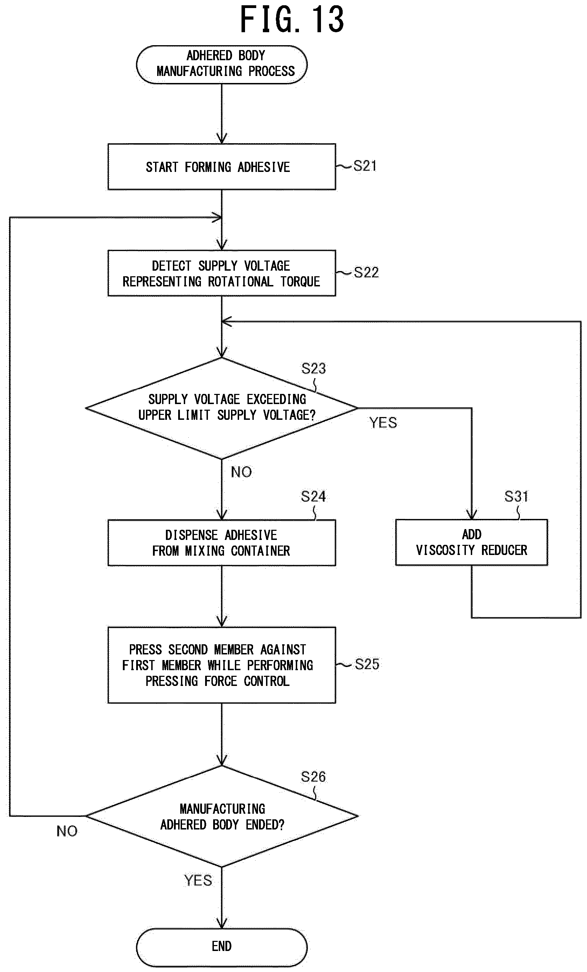

In the present embodiment as well, as illustrated in FIG. 13, the controller 300 determines whether the supply voltage exceeds the upper limit supply voltage in step S23.

In Embodiment 1 as described above, the upper limit supply voltage referenced by the controller 300 in step S23 in FIG. 9 serves as the first upper threshold for determining whether the condition for performing at least one of the stop control or the indication control is satisfied. In the present embodiment, in contrast, the upper limit supply voltage referenced by the controller 300 in step S23 in FIG. 13 serves as a second upper threshold for determining whether the condition for starting the viscosity reduction control is satisfied.

In other words, when the supply voltage exceeds the upper limit supply voltage as the second upper threshold (Yes in step S23) in the embodiment, the controller 300 provides the first operation command to the viscosity reducer supplier 150 to start the viscosity reduction control. Upon receiving the first operation command, the viscosity reducer supplier 150 adds a predetermined amount of the viscosity reducer 540 to the mixture in the mixing container 130 (step S31).

The stirring blade 141 thus kneads the mixture and the viscosity reducer 540 together in the mixing container 130. In this case, the adhesive 530 is formed from the main agent 510, the hardener 520, and the viscosity reducer 540. The added viscosity reducer 540 reduces the viscosity of the adhesive 530.

After step S31, the processing returns to the determination in step S23 again. In this manner, the viscosity reducer 540 is repeatedly added in the mixing container 130 until the supply voltage decreases to the upper limit supply voltage or lower, or in other words, until the rotational torque of the stirring blade 141 decreases to the upper limit rotational torque described above or smaller. Other processing is the same as in the adhered body manufacturing process in Embodiment 1 illustrated in FIG. 9.

As described above, the controller 300 in the present embodiment performs the viscosity reduction control to add the viscosity reducer 540 in the mixing container 130 until the supply voltage decreases to the upper limit supply voltage as the second upper threshold or lower. The added viscosity reducer 540 lowers the viscosity of the adhesive 530. The adhesive 530 with a lower viscosity is then provided for the pressing process (step S25).

In the present embodiment, the stop control and the indication control (step S27) illustrated in FIG. 9 can be eliminated, shortening the period for which the operation of the dispenser 100a is stopped and the time for washing the mixing container 130 or other maintenance.

### Modification of Embodiment 4

In Embodiment 4 described above, the pressing force control described in Embodiment 1 is performed in step S25 in FIG. 13. In step S25 in FIG. 13, the pressing time length control described in Embodiment 2 or both the pressing force control and the pressing time length control may be performed instead of the pressing force control.

When the supply voltage is determined to be lower than or equal to the upper limit supply voltage in step S23 in FIG. 13 (No in step S23), the viscosity of the adhesive 530 is reduced sufficiently. Thus, in step S25 in FIG. 13, the adhered body 600 with appropriate quality can be manufactured without at least one of the pressing force control or the pressing time length control. In other words, the pressing force from the second member 620 against the first member 610 and the pressing time length may remain constant in step S25 in FIG. 13.

### Embodiment 5

In step S23 in FIGS. 9 and 13, the determination is performed as to whether the viscosity of the adhesive 530 is too high. Instead of this determination, the determination may be performed as to whether the viscosity of the adhesive 530 is too low. When the viscosity of the adhesive 530 is determined to be too low, viscosity increase control to increase the viscosity of the adhesive 530 may be performed. This is described in detail below.

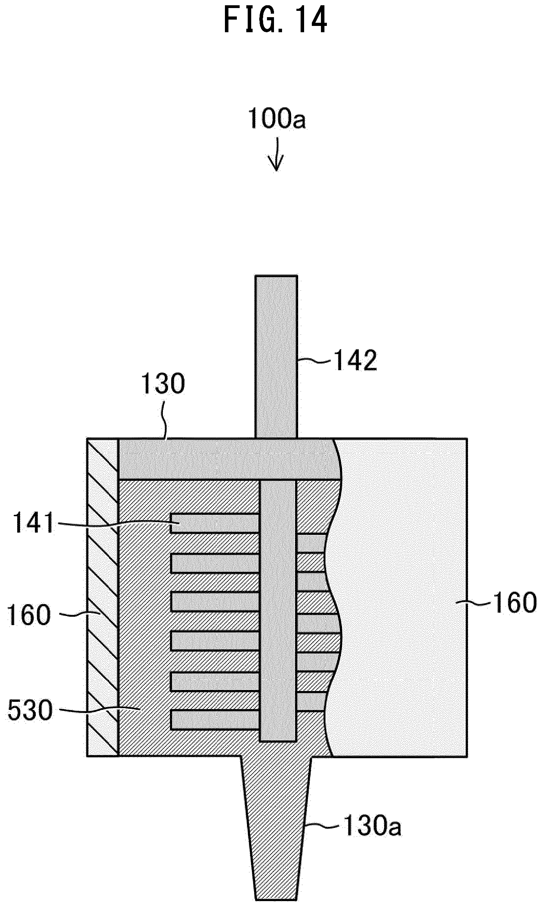

FIG. 14 is an enlarged view of a portion around a mixing container 130 in a dispenser 100a in the present embodiment. The dispenser 100a in the present embodiment further includes a cooler 160 that cools the adhesive 530. Other components are the same as in Embodiment 1.

The cooler 160 cools the adhesive 530 in the mixing container 130 when a second operation command is provided from the controller 300. The cooler 160 is attached to an outer surface of the mixing container 130 and cools the adhesive 530 through the mixing container 130.

More specifically, the cooler 160 in the present embodiment includes a module of a Peltier device being a flexible sheet covering the mixing container 130.

When the viscosity of the adhesive 530 is too low, the adhesive 530 may be spread outside the target area CA illustrated in FIG. 4B, causing difficulty in bonding the first member 610 and the second member 620 appropriately. The cooler 160 thus cools the adhesive 530 to increase the viscosity of the adhesive 530 when the viscosity of the adhesive 530 is too low.

The viscosity of the adhesive 530 may be reduced when the adhesive 530 warms with shear heat generated by the rotation of the stirring blade 141.

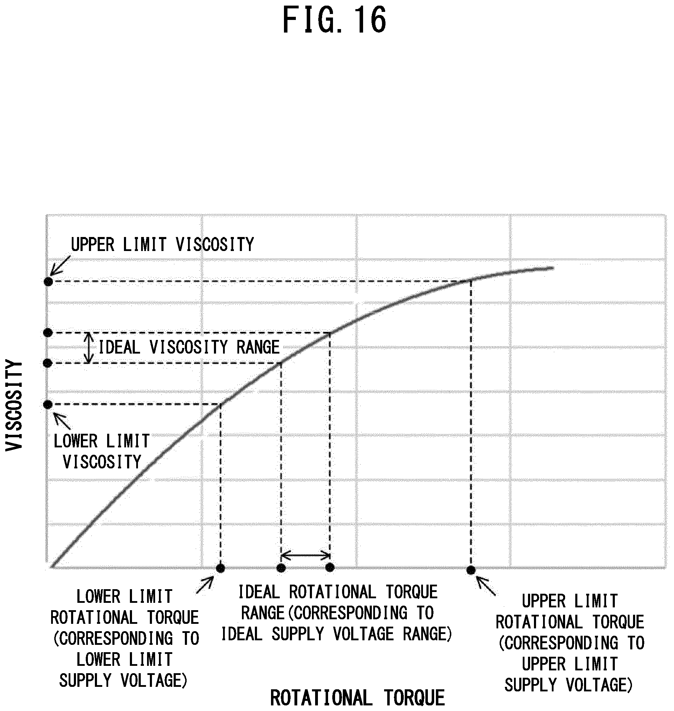

A method for detecting too low a viscosity of the adhesive 530 is described with reference to FIG. 16. A lower limit of a viscosity with which the first member 610 can be appropriately bonded to the second member 620 is referred to as a lower limit viscosity.

The rotational torque of the stirring blade 141 when the viscosity of the adhesive 530 is the lower limit viscosity is referred to as lower limit rotational torque. The voltage supplied to the motor 143 when the rotational torque of the stirring blade 141 is the lower limit rotational torque is referred to as a lower limit supply voltage.

Too low a viscosity of the adhesive 530 can be detected based on the voltage supplied to the motor 143 being below the lower limit supply voltage.

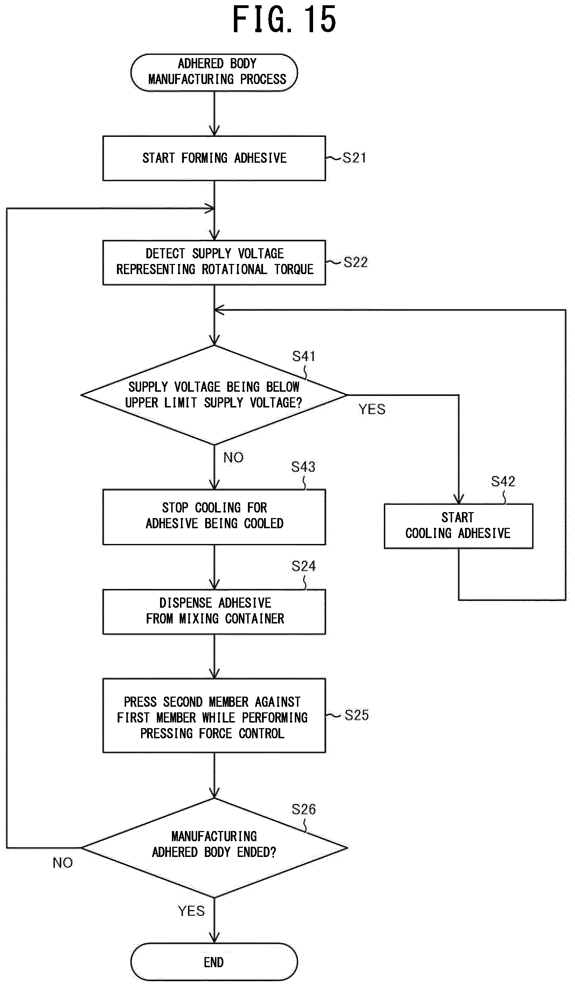

An adhered body manufacturing process in the present embodiment is described in detail with reference to FIG. 15. In the present embodiment, after detecting the voltage supplied to the motor 143 in step S22 described above, the controller 300 determines whether the supply voltage is below the lower limit supply voltage (step S41).

In the present embodiment, the lower limit supply voltage referenced by the controller 300 in step S41 in FIG. 15 serves as a second lower threshold for determining whether the condition for starting the viscosity increase control is satisfied.

In other words, when the supply voltage is below the lower limit supply voltage as the second lower threshold (Yes in step S41) and the viscosity of the adhesive 530 is too low, the controller 300 provides the second operation command to the cooler 160 to cause the cooler 160 to start cooling the adhesive 530 (step S42). When the temperature of the adhesive 530 decreases, the viscosity of the adhesive 530 increases gradually.

After step S42, the processing returns to the determination in step S41 again. When the supply voltage is higher than or equal to the lower limit supply voltage (No in step S41), the controller 300 causes the cooler 160 to stop cooling the adhesive 530 (step S43).

In this manner, the viscosity increase control is performed to continuously cool the adhesive 530 until the supply voltage increases to the lower limit supply voltage or higher, or in other words, until the rotational torque of the stirring blade 141 increases to the lower limit rotational torque described above or greater.

After step S43, the processing advances to step S24 and subsequent steps described above. Other processing is the same as in the adhered body manufacturing process in Embodiment 1 illustrated in FIG. 9.

As described above, the controller 300 in the present embodiment performs the viscosity increase control to cause the cooler 160 to cool the adhesive 530 until the supply voltage increases to the lower limit supply voltage as the second lower threshold or higher. This allows providing the adhesive 530 having an appropriately increased viscosity for the pressing process (step S25).

As in Embodiment 4, the stop control and the indication control (step S27) in FIG. 9 can be eliminated in the present embodiment as well. This can shorten the period for which the operation of the dispenser 100a is stopped and the time for washing the mixing container 130 or other maintenance.

### Modification of Embodiment 5

In Embodiment 5 described above, the pressing force control described in Embodiment 1 is performed in step S25 in FIG. 15. In step S25 in FIG. 15, the pressing time length control described in Embodiment 2 or both the pressing force control and the pressing time length control may be performed instead of the pressing force control.

When the supply voltage is determined to be higher than or equal to the lower limit supply voltage in step S41 in FIG. 15 (No in step S41), the viscosity of the adhesive 530 is increased sufficiently. Thus, in step S25 in FIG. 15, the adhered body 600 with appropriate quality can be manufactured without at least one of the pressing force control or the pressing time length control. In other words, the pressing force from the second member 620 against the first member 610 and the pressing time length may remain constant in step S25 in FIG. 15.

### Embodiment 6

The viscosity reduction control described in Embodiment 4, the viscosity increase control described in Embodiment 5, and the stop control and the indication control described in Embodiment 1 may be combined.

In step S23 in FIG. 13, the determination as to whether the supply voltage is higher than the upper limit supply voltage representing the upper limit viscosity is performed. In step S41 in FIG. 15, the determination as to whether the supply voltage is lower than the lower limit supply voltage representing the lower limit viscosity is performed. The viscosity of the adhesive 530 may be adjusted within an ideal range before the pressing process (step S25) by performing determination stricter than the above determination. This is described in detail below.

A method for detecting whether the viscosity of the adhesive 530 is within the ideal range (hereafter referred to as an ideal viscosity range) is described with reference to FIG. 16. The largest value within the ideal viscosity range is smaller than the upper limit viscosity described above, and the smallest value within the ideal viscosity range is larger than the lower limit viscosity described above.

The range of the rotational torque of the stirring blade 141 when the viscosity of the adhesive 530 is within the ideal viscosity range is referred to as an ideal rotational torque range. The range of the voltage supplied to the motor 143 when the rotational torque of the stirring blade 141 is within the ideal rotational torque range is referred to as an ideal supply voltage range.

The largest value within the ideal rotational torque range is smaller than the upper limit rotational torque described above, and the smallest value within the ideal rotational torque range is larger than the lower limit rotational torque described above. The largest value within the ideal supply voltage range is smaller than the upper limit supply voltage described above, and the smallest value within the ideal supply voltage range is larger than the lower limit supply voltage described above.

The viscosity of the adhesive 530 being within the ideal viscosity range can be detected based on the voltage supplied to the motor 143 being within the ideal supply voltage range.

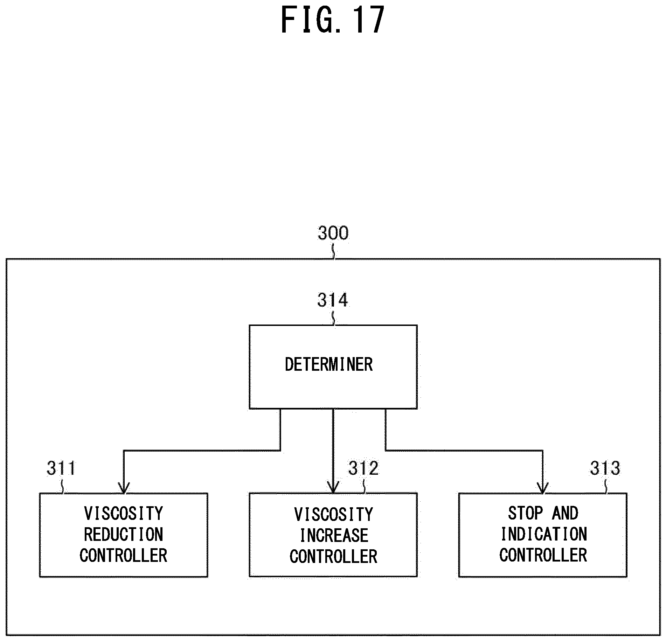

FIG. 17 is a functional block diagram of a controller 300 in the present embodiment. The controller 300 in the present embodiment includes a viscosity reduction controller 311 that performs the viscosity reduction control described above, a viscosity increase controller 312 that performs the viscosity increase control described above, and a stop and indication controller 313 that performs the stop control and the indication control described above.

The controller 300 also includes a determiner 314. The determiner 314 determines, based on the value of the supply voltage detected through the voltage signal SV, which control to be performed among the viscosity reduction control, the viscosity increase control, and the stop control and the indication control.

The functions of the viscosity reduction controller 311, the viscosity increase controller 312, the stop and indication controller 313, and the determiner 314 described above are implemented by the processor 310 executing the control program 321.

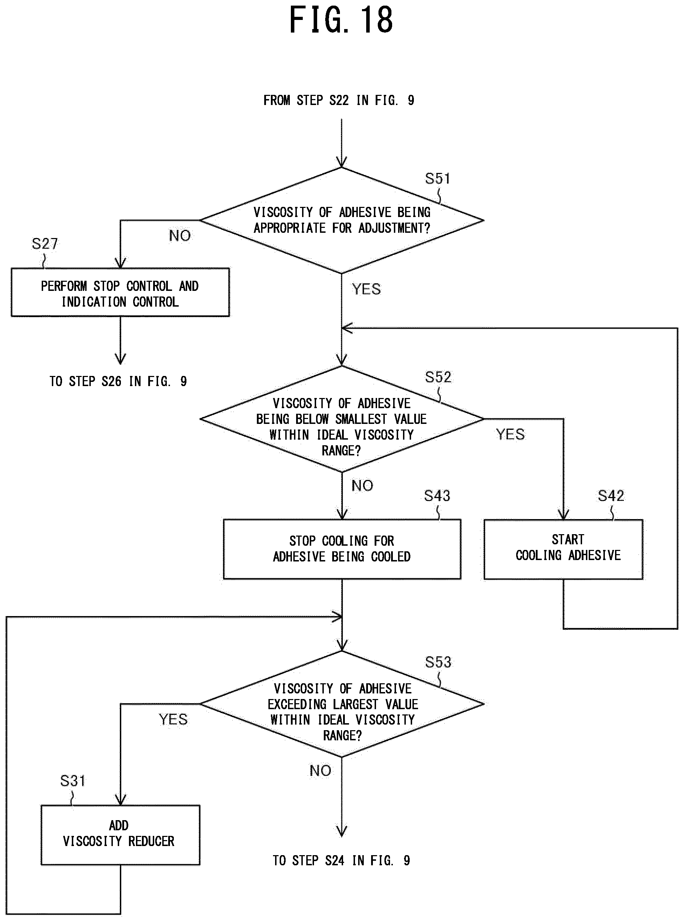

An adhered body manufacturing process in the present embodiment is described in detail with reference to FIG. 18. In the present embodiment, after the voltage supplied to the motor 143 is detected in step S22 described above, the determiner 314 determines whether the viscosity of the adhesive 530 is appropriate for adjustment (step S51).

When the viscosity of the adhesive 530 is lower than the lower limit viscosity, or in other words, when the supply voltage is lower than the lower limit supply voltage, or when the viscosity of the adhesive 530 exceeds the upper limit viscosity, or in other words, when the supply voltage exceeds the upper limit supply voltage, the viscosity of the adhesive 530 is to be adjusted substantially more than in other cases.

In the present embodiment, the viscosity of the adhesive 530 being appropriate for adjustment refers to the viscosity of the adhesive 530 being higher than or equal to the lower limit viscosity and lower than or equal to the upper limit viscosity.

In other words, the viscosity of the adhesive 530 is not appropriate for adjustment when the supply voltage is lower than the lower limit supply voltage or is higher than the upper limit supply voltage. In this case (No in step S51), the determiner 314 causes the stop and indication controller 313 to perform the stop control and the indication control described above (step S27), and the processing advances to step S26 in FIG. 9.

In the present embodiment, in step S51, the determiner 314 references the upper limit supply voltage and the lower limit supply voltage that respectively serve as the first upper threshold and the first lower threshold for determining whether the condition for performing at least one of the stop control or the indication control is satisfied.

In contrast, the viscosity of the adhesive 530 is appropriate for adjustment when the supply voltage is higher than or equal to the lower limit supply voltage and is lower than or equal to the upper limit supply voltage. In this case (Yes in step S51), the determiner 314 further determines whether the viscosity of the adhesive 530 is below the smallest value within the ideal viscosity range, or in other words, whether the supply voltage is lower than the smallest value within the ideal supply voltage range (step S52).

In the present embodiment, the smallest value of the ideal supply voltage range referenced by the determiner 314 in step S52 serves as a second lower threshold for determining whether the condition for starting the viscosity increase control described above is satisfied.

In other words, when the supply voltage is below the smallest value within the ideal supply voltage range as the second lower threshold (Yes in step S52), the determiner 314 causes the viscosity increase controller 312 to start cooling the adhesive 530 (step S42). This gradually increases the viscosity of the adhesive 530.

After step S42, the processing returns to the determination in step S52 again. When the supply voltage is higher than or equal to the second lower threshold (No in step S52), the determiner 314 causes the viscosity increase controller 312 to stop cooling the adhesive 530 (step S43). In this manner, the viscosity increase control is performed to cool the adhesive 530 until the supply voltage increases to the second lower threshold or higher.

After step S43, the determiner 314 further determines whether the viscosity of the adhesive 530 exceeds the largest value within the ideal viscosity range, or in other words, whether the supply voltage exceeds the largest value within the ideal supply voltage range (step S53).

In the present embodiment, the largest value of the ideal supply voltage range referenced by the determiner 314 in step S53 serves as a second upper threshold for determining whether the condition for starting the viscosity reduction control described above is satisfied.

In other words, when the supply voltage exceeds the largest value within the ideal supply voltage range as the second upper threshold (Yes in step S53), the determiner 314 causes the viscosity reduction controller 311 to perform the viscosity reduction control described above (step S31). This causes a predetermined amount of the viscosity reducer 540 to be added to the mixture in the mixing container 130, reducing the viscosity of the adhesive 530.

After step S31, the processing returns to the determination in step S53 again. In this manner, the viscosity reducer 540 is repeatedly added in the mixing container 130 until the supply voltage decreases to the second upper threshold or lower.

When the supply voltage is lower than or equal to the second upper threshold (No in step S53), the determiner 314 advances the processing to step S24 in FIG. 9. Other processing is the same as in the adhered body manufacturing process in Embodiment 1 illustrated in FIG. 9.

In the present embodiment, the adhesive 530 with the viscosity adjusted within the ideal viscosity range can be provided for the pressing process (step S25). The adhesive 530 with the viscosity that is to be adjusted substantially more and thus is not appropriate for adjustment is prevented from being provided for the pressing process (step S25). This can improve the manufacturing quality of the adhered body 600.

### Modification of Embodiment 6

In Embodiment 6 described above, when the supply voltage is lower than or equal to the second upper threshold in step S53 in FIG. 18 (No in step S53), the pressing force control is performed in step S25 in FIG. 9. In step S25 in FIG. 9, the pressing time length control described in Embodiment 2 or both the pressing force control and the pressing time length control may be performed instead of the pressing force control.

When the supply voltage is determined to be lower than or equal to the second upper threshold in step S53 in FIG. 18 (No in step S53), the viscosity of the adhesive 530 is within the ideal viscosity range. Thus, in step S25 in FIG. 9, the adhered body 600 with appropriate quality can be manufactured without at least one of the pressing force control or the pressing time length control. In other words, the pressing force from the second member 620 against the first member 610 and the pressing time length may remain constant in step S25 in FIG. 9.

Embodiments 1 to 6 have been described above. The embodiments may be modified in the manner described below.

In Embodiment 1 described above, the pressing force control to control the magnitude of the pressing force from the second member 620 against the first member 610 is performed to achieve the target filling rate. In Embodiment 2 described above, the pressing time length control to control the pressing time length of the second member 620 against the first member 610 is performed to achieve the target filling rate. The controller 300 may perform both the pressing force control and the pressing time length control in parallel.

In other words, the controller 300 may control both the pressing force and the pressing time length under conditions that the pressing force is greater and the pressing time length is longer when the rotational torque of the stirring blade 141 is greater, and the pressing force is smaller and the pressing time length is shorter when the rotational torque of the stirring blade 141 is smaller. Such control can be performed using the specific value data 322 indicating the dependence of the specific pressing force and the specific pressing time length on the supply voltage applied to the motor 143.

In Embodiment 1 described above, the controller 300 performs the pressing force control as well as the stop control and the indication control. The pressing force control is independent of the stop control and the indication control. The controller 300 may thus perform the pressing force control alone or the stop control and the indication control alone. The controller 300 may perform one of the stop control or the indication control alone. The controller 300 may perform, as described above, the pressing time length control instead of the pressing force control, or may perform both the pressing force control and the pressing time length control.

Although the rotational torque of the stirring blade 141 is indirectly detected based on the voltage supplied to the motor 143 in Embodiment 1 described above, the rotational torque of the stirring blade 141 may be directly detected using a torque meter or another detector.

Although the second member 620 is pressed against the first member 610 with the adhesive 530 adhering in Embodiment 1 described above, the first member 610 with the adhesive 530 adhering may be pressed against the second member 620.

The controller 300 illustrated in FIG. 3 can be implemented with a known computer. In other words, the control program 321 illustrated in FIG. 3 installed on a computer allows the computer to function as the controller 300. More specifically, the control program 321 causes a computer to implement the first to fourth control functions described below.

The first control function controls, based on the value of the rotational torque of the stirring blade 141 or the physical quantity representing the rotational torque, at least one of the magnitude of the pressing force from the second member 620 against the first member 610 or the pressing time length.

The second control function performs, when the value of the rotational torque of the stirring blade 141 or the physical quantity representing the rotational torque exceeds the predetermined first upper threshold, at least one of the stop control to stop supply of the main agent 510 from the main agent supplier 110 to the mixing container 130 and supply of the hardener 520 from the hardener supplier 120 to the mixing container 130, or the indication control to indicate that the viscosity of the adhesive 530 is abnormal. At least one of the stop control or the indication control may be performed when the value of the rotational torque of the stirring blade 141 or the physical quantity representing the rotational torque is below the predetermined first lower threshold.

The third control function performs, when the value of the physical quantity representing the rotational torque of the stirring blade 141 exceeds the second upper threshold, the viscosity reduction control by providing the first operation command to the viscosity reducer supplier 150 to add the viscosity reducer 540 to the mixture until the value of the physical quantity decreases to the second upper threshold or less.

The fourth control function performs, when the value of the physical quantity representing the rotational torque of the stirring blade 141 is below the predetermined second lower threshold, the viscosity increase control by providing the second operation command to the cooler 160 to cause the cooler 160 to cool the adhesive 530 until the value of the physical quantity increases to the second lower threshold or greater.

The control program 321 may be distributed through a communication network or may be stored in a non-transitory computer-readable recording medium.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2022-004502, filed on January 14, 2022, the entire disclosure of which is incorporated by reference herein.

### Reference Signs List

- 100: Dispensing device
- 100a: Dispenser
- 100b: Dispenser transporter
- 110: Main agent supplier
- 111: Main agent container
- 112: Main agent feeder
- 120: Hardener supplier
- 121: Hardener container
- 122: Hardener feeder
- 130: Mixing container
- 130a: Dispensing nozzle
- 140: Mixer
- 141: Stirring blade
- 142: Rotational shaft
- 143: Motor
- 144: Power supply circuit (detector)
- 150: Viscosity reducer supplier
- 151: Viscosity reducer container
- 152: Viscosity reducer feeder
- 160: Cooler
- 200: Pressing device
- 200a: Presser
- 200b: Presser transporter
- 210: Holder
- 211: Suction hole
- 212: Holding surface
- 220: Load cell
- 230: Forward-backward mover
- 300: Controller
- 310: Processor
- 311: Viscosity reduction controller
- 312: Viscosity increase controller
- 313: Stop and indication controller
- 314: Determiner
- 320: Memory
- 321: Control program
- 322: Specific value data
- 323: Threshold data
- 400: Adhesive bonding apparatus
- 510: Main agent
- 520: Hardener
- 530: Adhesive
- 540: Viscosity reducer
- 600: Adhered body
- 610: First member
- 620: Second member
- CA: Target area
- SP: Pressing force signal
- SV: Voltage signal

## Claims

1. An adhesive bonding apparatus, comprising:
a main agent supplier to supply a main agent;
a hardener supplier to supply a hardener for hardening the main agent;
a mixing container to which the main agent supplier supplies the main agent and the hardener supplier supplies the hardener;
a mixer including a stirring blade located in the mixing container and a motor to rotate the stirring blade, the mixer being configured to mix the main agent and the hardener together with the stirring blade rotatable in the mixing container to form, in the mixing container, an adhesive that is a mixture of the main agent and the hardener;
a presser to cause a second member to face a first member across the adhesive dispensed from the mixing container and adhering to the first member and to perform pressing one of the first member or the second member against the other until the adhesive is pressed and spread;
a detector to detect, when the stirring blade mixes the main agent and the hardener together or when the stirring blade re-kneads the adhesive formed in the mixing container, torque of rotation of the stirring blade or a physical quantity representing the torque; and
a controller to control, based on a value of the torque or the physical quantity detected by the detector, at least one of a magnitude of a force of the pressing performed by the presser or a time length of the pressing performed by the presser.

2. An adhesive bonding apparatus, comprising:
a main agent supplier to supply a main agent;
a hardener supplier to supply a hardener for hardening the main agent;
a mixing container to which the main agent supplier supplies the main agent and the hardener supplier supplies the hardener;
a mixer including a stirring blade located in the mixing container and a motor to rotate the stirring blade, the mixer being configured to mix the main agent and the hardener together with the stirring blade rotatable in the mixing container to form, in the mixing container, an adhesive that is a mixture of the main agent and the hardener;
a presser to cause a second member to face a first member across the adhesive dispensed from the mixing container and adhering to the first member and to perform pressing one of the first member or the second member against the other until the adhesive is pressed and spread;
a detector to detect, when the stirring blade mixes the main agent and the hardener together or when the stirring blade re-kneads the adhesive formed in the mixing container, torque of rotation of the stirring blade or a physical quantity representing the torque; and
a controller to perform, in a case where a value of the torque or the physical quantity detected by the detector exceeds a predetermined first upper threshold, at least one of stop control or indication control, the stop control being control to stop supply of the main agent from the main agent supplier to the mixing container and supply of the hardener from the hardener supplier to the mixing container, the indication control being control to indicate that a viscosity of the adhesive is abnormal.

3. An adhesive bonding apparatus, comprising:
a main agent supplier to supply a main agent;
a hardener supplier to supply a hardener for hardening the main agent;
a mixing container to which the main agent supplier supplies the main agent and the hardener supplier supplies the hardener;
a mixer including a stirring blade located in the mixing container and a motor to rotate the stirring blade, the mixer being configured to mix the main agent and the hardener together with the stirring blade rotatable in the mixing container to form, in the mixing container, an adhesive including a mixture of the main agent and the hardener;
a presser to cause a second member to face a first member across the adhesive dispensed from the mixing container and adhering to the first member and to perform pressing one of the first member or the second member against the other until the adhesive is pressed and spread;
a detector to detect, when the stirring blade mixes the main agent and the hardener together or when the stirring blade re-kneads the adhesive formed in the mixing container, torque of rotation of the stirring blade or a physical quantity representing the torque;
a viscosity reducer supplier to add, to the mixture in the mixing container, a viscosity reducer to reduce a viscosity of the mixture in a case where an operation command is provided from an outside; and
a controller to perform, in a case where a value of the torque or the physical quantity detected by the detector exceeds a predetermined second upper threshold, viscosity reduction control by providing the operation command to the viscosity reducer supplier to add the viscosity reducer to the mixture until the value of the torque or the physical quantity decreases to the predetermined second upper threshold or less.

4. An adhesive bonding apparatus, comprising:
a main agent supplier to supply a main agent;
a hardener supplier to supply a hardener for hardening the main agent;
a mixing container to which the main agent supplier supplies the main agent and the hardener supplier supplies the hardener;
a mixer including a stirring blade located in the mixing container and a motor to rotate the stirring blade, the mixer being configured to mix the main agent and the hardener together with the stirring blade rotatable in the mixing container to form, in the mixing container, an adhesive that is a mixture of the main agent and the hardener;
a presser to cause a second member to face a first member across the adhesive dispensed from the mixing container and adhering to the first member and to perform pressing one of the first member or the second member against the other until the adhesive is pressed and spread;
a detector to detect, when the stirring blade mixes the main agent and the hardener together or when the stirring blade re-kneads the adhesive formed in the mixing container, torque of rotation of the stirring blade or a physical quantity representing the torque;
a cooler to cool the adhesive in the mixing container to increase a viscosity of the adhesive in a case where an operation command is provided from an outside; and
a controller to perform, in a case where a value of the torque or the physical quantity detected by the detector is smaller than a predetermined second lower threshold, viscosity increase control by providing the operation command to the cooler to cause the cooler to cool the adhesive until the value of the torque or the physical quantity increases to the predetermined second lower threshold or greater.

5. A control program to be executed by a computer to control an adhesive bonding apparatus including
a main agent supplier to supply a main agent,
a hardener supplier to supply a hardener for hardening the main agent,
a mixing container to which the main agent supplier supplies the main agent and the hardener supplier supplies the hardener,
a mixer including a stirring blade located in the mixing container and a motor to rotate the stirring blade, the mixer being configured to mix the main agent and the hardener together with the stirring blade rotatable in the mixing container to form, in the mixing container, an adhesive that is a mixture of the main agent and the hardener,
a presser to cause a second member to face a first member across the adhesive dispensed from the mixing container and adhering to the first member and to perform pressing one of the first member or the second member against the other until the adhesive is pressed and spread, and
a detector to detect, when the stirring blade mixes the main agent and the hardener together or when the stirring blade re-kneads the adhesive formed in the mixing container, torque of rotation of the stirring blade or a physical quantity representing the torque,
the control program causing the computer to perform operations comprising:
controlling, based on a value of the torque or the physical quantity detected by the detector, at least one of a magnitude of a force of the pressing performed by the presser or a time length of the pressing performed by the presser.

6. A control program to be executed by a computer to control an adhesive bonding apparatus including
a main agent supplier to supply a main agent,
a hardener supplier to supply a hardener for hardening the main agent,
a mixing container to which the main agent supplier supplies the main agent and the hardener supplier supplies the hardener,
a mixer including a stirring blade located in the mixing container and a motor to rotate the stirring blade, the mixer being configured to mix the main agent and the hardener together with the stirring blade rotatable in the mixing container to form, in the mixing container, an adhesive that is a mixture of the main agent and the hardener,
a presser to cause a second member to face a first member across the adhesive dispensed from the mixing container and adhering to the first member and to perform pressing one of the first member or the second member against the other until the adhesive is pressed and spread, and
a detector to detect, when the stirring blade mixes the main agent and the hardener together or when the stirring blade re-kneads the adhesive formed in the mixing container, torque of rotation of the stirring blade or a physical quantity representing the torque,
the control program causing the computer to perform operations comprising:
performing, in a case where a value of the torque or the physical quantity detected by the detector exceeds a predetermined first upper threshold, at least one of stop control or indication control, the stop control being control to stop supply of the main agent from the main agent supplier to the mixing container and supply of the hardener from the hardener supplier to the mixing container, the indication control being control to indicate that a viscosity of the adhesive is abnormal.

7. A control program to be executed by a computer to control an adhesive bonding apparatus including
a main agent supplier to supply a main agent,
a hardener supplier to supply a hardener for hardening the main agent,
a mixing container to which the main agent supplier supplies the main agent and the hardener supplier supplies the hardener,
a mixer including a stirring blade located in the mixing container and a motor to rotate the stirring blade, the mixer being configured to mix the main agent and the hardener together with the stirring blade rotatable in the mixing container to form, in the mixing container, an adhesive including a mixture of the main agent and the hardener,
a presser to cause a second member to face a first member across the adhesive dispensed from the mixing container and adhering to the first member and to perform pressing one of the first member or the second member against the other until the adhesive is pressed and spread,
a detector to detect, when the stirring blade mixes the main agent and the hardener together or when the stirring blade re-kneads the adhesive formed in the mixing container, torque of rotation of the stirring blade or a physical quantity representing the torque, and
a viscosity reducer supplier to add, to the mixture in the mixing container, a viscosity reducer to reduce a viscosity of the mixture in a case where an operation command is provided from an outside,
the control program causing the computer to perform operations comprising:
performing, in a case where a value of the torque or the physical quantity detected by the detector exceeds a predetermined second upper threshold, viscosity reduction control by providing the operation command to the viscosity reducer supplier to add the viscosity reducer to the mixture until the value of the torque or the physical quantity decreases to the predetermined second upper threshold or less.

8. A control program to be executed by a computer to control an adhesive bonding apparatus including
a main agent supplier to supply a main agent,
a hardener supplier to supply a hardener for hardening the main agent,
a mixing container to which the main agent supplier supplies the main agent and the hardener supplier supplies the hardener,
a mixer including a stirring blade located in the mixing container and a motor to rotate the stirring blade, the mixer being configured to mix the main agent and the hardener together with the stirring blade rotatable in the mixing container to form, in the mixing container, an adhesive that is a mixture of the main agent and the hardener,
a presser to cause a second member to face a first member across the adhesive dispensed from the mixing container and adhering to the first member and to perform pressing one of the first member or the second member against the other until the adhesive is pressed and spread,
a detector to detect, when the stirring blade mixes the main agent and the hardener together or when the stirring blade re-kneads the adhesive formed in the mixing container, torque of rotation of the stirring blade or a physical quantity representing the torque, and
a cooler to cool the adhesive in the mixing container to increase a viscosity of the adhesive in a case where an operation command is provided from an outside,
the control program causing the computer to perform operations comprising:
performing, in a case where a value of the torque or the physical quantity detected by the detector is smaller than a predetermined second lower threshold, viscosity increase control by providing the operation command to the cooler to cause the cooler to cool the adhesive until the value of the torque or the physical quantity increases to the predetermined second lower threshold or greater.

9. An adhered body manufacturing method, comprising:
preparing an adhesive by mixing a main agent and a hardener for hardening the main agent together in a mixing container with a stirring blade rotatable by a motor to form, in the mixing container, an adhesive that is a mixture of the main agent and the hardener or by re-kneading the adhesive formed in the mixing container with the stirring blade;
dispensing the adhesive from the mixing container to a first member;
causing a second member to face the first member across the adhesive dispensed from the mixing container and adhering to the first member, and pressing one of the first member or the second member against the other until the adhesive is pressed and spread; and
acquiring specific value data through measurement before the preparing, the specific value data indicating dependence of a magnitude of a force of the pressing or a time length of the pressing to press and spread the adhesive in the pressing on torque to rotate the stirring blade in the preparing, wherein
the pressing includes controlling, using the specific value data, at least one of the magnitude of the force of the pressing or the time length of the pressing, based on a value of the torque of rotation of the stirring blade or a physical quantity representing the torque in the preparing.

10. An adhered body manufacturing method, comprising:
preparing an adhesive by mixing a main agent and a hardener for hardening the main agent together in a mixing container with a stirring blade rotatable by a motor to form, in the mixing container, an adhesive that is a mixture of the main agent and the hardener or by re-kneading the adhesive formed in the mixing container with the stirring blade;
dispensing the adhesive from the mixing container to a first member;
causing a second member to face the first member across the adhesive dispensed from the mixing container and adhering to the first member and pressing one of the first member or the second member against the other until the adhesive is pressed and spread; and
identifying including measuring, before the preparing, dependence of a filling rate on torque to rotate the stirring blade in the preparing, the filling rate representing a degree of spreading of the adhesive pressed in the pressing, and identifying, using a result from the measuring, a first upper threshold representing an upper limit of the torque to acquire a specific value of the filling rate, wherein
the preparing includes determining whether the torque of rotation of the stirring blade or a physical quantity representing the torque exceeds the first upper threshold and stopping, in a case where the torque or the physical quantity exceeds the first upper threshold, dispensing the adhesive from the mixing container to the first member in the dispensing.

11. An adhered body manufacturing method, comprising:
preparing an adhesive by mixing a main agent and a hardener for hardening the main agent together in a mixing container with a stirring blade rotatable by a motor to form, in the mixing container, an adhesive including a mixture of the main agent and the hardener or by re-kneading the adhesive formed in the mixing container with the stirring blade;
dispensing the adhesive from the mixing container to a first member; and
causing a second member to face the first member across the adhesive dispensed from the mixing container and adhering to the first member and pressing one of the first member or the second member against the other until the adhesive is pressed and spread, wherein
the preparing includes adding, in a case where a value of torque of rotation of the stirring blade or a physical quantity representing the torque exceeds a predetermined second upper threshold, a viscosity reducer for reducing a viscosity of the mixture to the mixture in the mixing container until the value of the torque or the physical quantity decreases to the predetermined second upper threshold or less.

12. An adhered body manufacturing method, comprising:
preparing an adhesive by mixing a main agent and a hardener for hardening the main agent together in a mixing container with a stirring blade rotatable by a motor to form, in the mixing container, an adhesive that is a mixture of the main agent and the hardener or by re-kneading the adhesive formed in the mixing container with the stirring blade;
dispensing the adhesive from the mixing container to a first member; and
causing a second member to face the first member across the adhesive dispensed from the mixing container and adhering to the first member and pressing one of the first member or the second member against the other until the adhesive is pressed and spread, wherein
the preparing includes cooling, in a case where a value of torque of rotation of the stirring blade or a physical quantity representing the torque is smaller than a predetermined second lower threshold, the adhesive in the mixing container until the value of the torque or the physical quantity increases to the predetermined second lower threshold or greater.
